# EUROPÄISCHE PATENTSCHRIFT

(11) **EP 3 707 865 B1**
(45) Veröffentlichungstag und Bekanntmachung des Hinweises auf die Patenterteilung: **05.01.2022**
(21) Anmeldenummer: 18800578.9
(22) Anmeldetag: 07.11.2018
(51) Int. Cl.: H04L 12/931, H04L 29/08

(54) **VERFAHREN ZUM BETREIBEN EINER ETHERNET-KOMMUNIKATIONSEINRICHTUNG UND ETHERNET-KOMMUNIKATIONSEINRICHTUNG**
METHOD FOR OPERATING AN ETHERNET COMMUNICATION DEVICE, AND ETHERNET COMMUNICATION DEVICE
PROCÉDÉ POUR FAIRE FONCTIONNER UN DISPOSITIF DE COMMUNICATION ETHERNET ET DISPOSITIF DE COMMUNICATION ETHERNET

(30) Priorität: 07.11.2017 DE 102017219770
(43) Veröffentlichungstag der Anmeldung: 16.09.2020
(73) Patentinhaber: Continental Automotive GmbH, 30165 Hannover (DE)
(72) Erfinder: ZINNER, Helge, 81737 München (DE)
(74) Vertreter: Continental Corporation
(86) Internationale Anmeldenummer: PCT/EP2018/080443
(87) Internationale Veröffentlichungsnummer: WO 2019/092006

(56) Entgegenhaltungen:
- EP-A1- 3 148 236
- Anonymous: "AN12088 Application hints for TJA1100 Automotive Ethernet PHY", , 28. August 2017 (2017-08-28), Seiten 1-67, XP055541510, Gefunden im Internet: URL:https://www.nxp.com/docs/en/applicatio n-note/AN12088.pdf [gefunden am 2019-01-14]
- Anonymous: "Understanding Storm Control on EX Series Switches - Technical Documentation - Support - Juniper Networks", , 1. Oktober 2017 (2017-10-01), Seiten 1-2, XP055541594, Gefunden im Internet: URL:https://web.archive.org/web/2017100116 0932/https://www.juniper.net/documentation /en_US/junos/topics/concept/rate-limiting- storm-control-understanding.html [gefunden am 2019-01-14]

## Beschreibung

Die Erfindung betrifft ein Verfahren zum Betreiben einer Ethernet-Kommunikationseinrichtung mit mehreren externen physischen Schnittstellen für ein Kraftfahrzeug. Weiterhin betrifft die Erfindung eine Ethernet-Kommunikationseinrichtung für ein Kraftfahrzeug. Die Ethernet-Kommunikationseinrichtung weist eine Medienzugriffssteuerungseinheit und mindestens eine externe physische Schnittstelle auf.

Ethernet-Kommunikationseinrichtungen sind bekannt. So ist die Ethernet-Kommunikationseinrichtung beispielsweise als Switch- bzw. Netzwerkweiche bekannt. Ein Switch bezeichnet ein Kopplungselement, das Netzwerksegmente miteinander verbindet. Es sorgt innerhalb eines Netzwerksegments dafür, dass Datenpakete, sog. Frames, an ihr Ziel kommen.

Die Ethernet-Kommunikationseinrichtung wird im Ethernet eingesetzt. Ethernet ist eine Technik, die Software, beispielsweise Protokolle, und Hardware, beispielsweise Kabel, Verteiler oder Netzwerkkarten, für kabelgebundene Datennetze spezifiziert. Ethernet entspricht weitgehend der IEEE-Norm 802.3.

Es ist Aufgabe der vorliegenden Erfindung, ein Verfahren und eine Ethernet-Kommunikationseinrichtung zu schaffen, bei welchem bzw. mit welcher die Sicherheit der Ethernet-Kommunikationseinrichtung erhöht wird.

Diese Aufgabe wird durch ein Verfahren und eine Ethernet-Kommunikationseinrichtung gemäß den unabhängigen Ansprüchen gelöst.

Bei einem erfindungsgemäßen Verfahren wird eine Ethernet-Kommunikationseinrichtung für ein Kraftfahrzeug betrieben. Die Ethernet-Kommunikationseinrichtung weist mehrere externe physische Schnittstellen auf. Es werden folgende Schritte durchgeführt:
- Erkennen eines Sonderzustands an zumindest einer der Schnittstellen;
- Erzeugen eines Steuersignals zum Anpassen der Schnittstelle im Sonderzustand, falls der Sonderzustand erkannt wird; und
- Blockieren einer Weiterleitung eines an der Schnittstelle im Sonderzustand eintreffenden Nachrichtenpakets zu einer Medienzugriffssteuerungseinheit der Ethernet-Kommunikationseinrichtung anhand des Steuersignals.

Der Erfindung liegt die Kenntnis zu Grunde, dass ein unerwünschtes Nachrichtenpaket, welches an der Schnittstelle eintrifft auch gleich an der Schnittstelle abgelehnt werden kann.

Bei aus dem Stand der Technik bekannten Ethernet-Kommunikationseinrichtungen hingegen ist es üblich, dass ein Nachrichtenpaket stets von der Schnittstelle auch zur Medienzugriffssteuerungseinheit weitergeleitet wird. In der Medienzugriffssteuerungseinheit und/oder in einem Mikrocontroller der Ethernet-Kommunikationseinrichtung wird dann erst entschieden, wie das Nachrichtenpaket behandelt werden soll.

Druckschrift "AN12088 Application hints for TJA1100 Automotive Ethernet PHY", NXP Semiconductors, XP055541510, beschreibt ein Verfahren zum Betreiben einer Ethernet-Kommunikationseinrichtung mit mehreren externen physischen Schnittstellen für ein Kraftfahrzeug und offenbart, dass ein Sonderzustand an zumindest einer der Schnittstellen erkannt werden kann. Jedoch werden nur Fehlerzustände erkannt und die Schnittstelle deshalb "eingefroren". Druckschrift "Understanding Storm Control on EX Series Switches - Technical Documentation-Support - Juniper Networks", 2017-10-01, XP055541594, beschreibt das zweitweise Ausschalten von Schnittstellen bei zu hoher Verkehrslast.

Vorteilhaft beim Ablehnen des Nachrichtenpakets in der Schnittstelle ist, dass die Medienzugriffssteuerungseinheit und/oder der Mikrocontroller weniger Arbeit hat, da das Nachrichtenpaket nicht bis dorthin weitergeleitet wird, falls der Sonderzustand erkannt wird. Die Ethernet-Kommunikationseinrichtung kann also aufwandsärmer und energieärmer betrieben werden. Die Ethernet-Kommunikationseinrichtung ist insbesondere als Switch bzw. Netzwerkweiche ausgebildet. Die Ethernet-Kommunikationseinrichtung kann aber auch als Knotenpunkt bzw. Hub ausgebildet sein.

Die Schnittstelle ist insbesondere als PHY ausgebildet. Der PHY steht dabei für physische Schnittstelle. Der PHY ist ein spezieller integrierter Schaltkreis oder eine funktionelle Gruppe eines Schaltkreises, der für die Codierung und Decodierung von Daten zwischen einem reinen digitalen System und einem modulierten analogen System zuständig ist.

Der Sonderzustand ist insbesondere ein Zustand, in welchem zumindest ein unerwünschtes Nachrichtenpaket an der Schnittstelle von außerhalb der Ethernet-Kommunikationseinrichtung eintrifft bzw. empfangen wird.

Durch das Steuersignal wird insbesondere gesteuert, ob die Schnittstelle für das Nachrichtenpaket durchlässig ist oder, ob die Schnittstelle für das Nachrichtenpaket undurchlässig ist, also das Nachrichtenpaket blockiert wird. Durch das Steuersignal kann die Schnittstelle in einen undurchlässigen Modus geschaltet werden oder bei Beendigung des Sonderzustands wieder in einen durchlässigen Modus, welcher insbesondere einem Normalzustand der Schnittstelle entspricht.

Die Medienzugriffssteuerungseinheit (MAC - media access controll) ist eine Implementierung einer Schicht des OSI-Modells (open system interconnection model). Die Sicherungsschicht bzw. Schicht 2 des OSI-Modells wird in die Unterschichten media access controll (2a) und logical link controll (2b) unterteilt, wobei die MAC die untere der beiden Schichten abbildet. Die Medienzugriffssteuerungseinheit bzw. MAC ist die zweitunterste Schicht des OSI-Modells und umfasst Netzwerkprotokolle und Bauteile, die regeln, wie sich mehrere Rechner das gemeinsam genutzte physische Übertragungsmedium teilen. Sie wird benötigt, da ein gemeinsam genutztes Medium nicht gleichzeitig von mehreren Rechnern verwendet werden kann, ohne dass es zu Datenkollisionen und damit zu Kommunikationsstörungen oder Datenverlust kommt.

Durch das Blockieren der Weiterleitung des Nachrichtenpakets an der Schnittstelle, verlangt die Medienzugriffssteuerungseinheit insbesondere keinerlei Kenntnis von dem eingetroffenen Nachrichtenpaket. Die Medienzugriffssteuerungseinheit wird also durch das Blockieren der Weiterleitung von dem Nachrichtenpaket abgeschirmt.

Vorzugsweise ist es vorgesehen, dass die Weiterleitung zur Medienzugriffssteuerungseinheit durch Deaktivieren der Schnittstelle blockiert wird. Beim Deaktivieren wird die Schnittstelle insbesondere ausgeschaltet. Vorteilhaft ist, dass durch das Deaktivieren der Schnittstelle Energie eingespart wird und die Ethernet-Kommunikationseinrichtung mit dem Nachrichtenpaket oder auch mit weiteren Nachrichtenpaketen keine Arbeit hat. Die Ethernet-Kommunikationseinrichtung kann dadurch sicherer und sparsamer betrieben werden.

Alternativ ist es vorzugsweise vorgesehen, dass die Weiterleitung zur Medienzugriffssteuerungseinheit durch eine Schleifenschaltung der Schnittstelle blockiert wird. Schleifenschaltung kann auch als loop-back bezeichnet werden. Die Schleifenschaltung ist ein Nachrichten- oder Informationskanal mit nur einem Endpunkt, so dass Sender und Empfänger identisch sind. Die Schleifenschaltung kann derart ausgebildet sein, dass das empfangene Nachrichtenpaket zum Sender bzw. der letzten Vermittlungseinheit zurückgeschleift wird und dem Ziel bzw. der Ethernet-Kommunikationseinrichtung statt des Nachrichtenpakets ein Alarmindikationssignal eingespeist wird. Insbesondere ist die Schleifenschaltung allerdings derart ausgebildet, dass das Nachrichtenpaket lediglich an den Sender bzw. an die letzte Vermittlungseinheit zurückgeschleift wird und die Medienzugriffssteuerungseinheit keinerlei Kenntnis vom Empfang des Nachrichtenpakets erhält. Vorteilhaft ist die Schleifenschaltung, da die Schnittstelle bei beendetem Sonderzustand schneller (wieder) in den normalen Betrieb, in welchem ein Nachrichtenpaket zur Medienzugriffssteuerungseinheit weitergeleitet wird, gebracht werden kann. Eine Abschaltung des Ports bekommt der letzte Linkpartner evtl. mit, und der Linkstatus würde in diesem Fall in einen Fehlerzustand gehen. Wenn der Port aber an bleibt, so merkt das auf unterste Ebene der Linkpartner erst nicht, dass eine Schleife aktiv ist. Ein weiterer Vorteil der Schleife wäre das der Port aktiv gehalten wird, also das System sieht, dass der Link aktiv ist. Wenn die Schnittstelle physikalisch extern oder ausreichend getrennt ist, dann könnte das Steuergerät zwischenzeitlich neu gestartet werden, ein Update fahren um mit dem Fehler besser umzugehen, die Auswirkung des Fehlers bestätigen usw. Ein potenzieller Angreifer wurde das nicht mitbekommen, da der Link weiterhin besteht. Das Steuergerät dahinter wäre aber aus oder nicht erreichbar. Deshalb kann die Schleifenschaltung nicht nur eine mögliche Ausgestaltung des Blockierens sein, sondern auch das Verschleiern einer Aktion hinter den Port. So ist es bei der Schleifenschaltung beispielsweise nicht nötig eine längere Aufstartzeit der Schnittstelle abzuwarten, wie es beispielsweise beim Deaktivieren also dem insbesondere vollständigen Ausschalten der Schnittstelle, der Fall sein kann. Die Zeitersparnis könnte z.B. bei ca. 100 ms liegen, und auch eine Neukonfiguration könnte hiermit erspart bleiben.

Weiterhin vorzugsweise ist es vorgesehen, dass der Sonderzustand erkannt wird, falls innerhalb eines vorbestimmten Zeitraums eine Anzahl von empfangenen Nachrichtenpaketen größer als ein Nachrichtenpaketgrenzwert ist. Die Ethernet-Kommunikationseinrichtung kann beispielsweise durch übermäßig viele Nachrichtenpakete nach dem DDoS-Prinzip (DDoS - Distributed Denial of Service) angegriffen werden. Durch den Angriff kann die Ethernet-Kommunikationseinrichtung beispielsweise überlastet werden, so dass ein ordentlicher Betrieb der Ethernet-Kommunikationseinrichtung nicht mehr aufrechterhalten werden kann oder aber die Ethernet-Kommunikationseinrichtung neu gestartet werden muss. Durch das Festsetzen des Nachrichtenpaketgrenzwerts kann beispielsweise bestimmt werden, bis zu welcher Anzahl von empfangener Nachrichtenpakete innerhalb des vorbestimmten Zeitraums von einem Normalzustand der Ethernet-Kommunikationseinrichtung ausgegangen werden kann, also bis zu welcher Anzahl von Nachrichtenpaketen die Ethernet-Kommunikationseinrichtung ordnungsgemäß betrieben werden kann oder aber welche Anzahl von Nachrichtenpaketen normalerweise ohne von einem Angriff auszugehen empfangen werden.

Weiterhin ist es vorzugsweise vorgesehen, dass der Sonderzustand erkannt wird, falls die Ethernet-Kommunikationseinrichtung noch in einem Startmodus, welcher durch einen Ladevorgang der Ethernet-Kommunikationseinrichtung charakterisiert wird, ist. Ebenfalls könnte die Schnittstelle immer sofort in den Schleifenmodus versetzt werden bis die Konfiguration der Kommunikationseinrichtung abgeschlossen ist. Die Schnittstelle könnte auch über die Leitung aufweckbar sein, also vom Link Partner, und deshalb könnte es von Vorteil sein, wenn die Schnittstelle auch in diesem Fall zuerst konfiguriert wird, ohne auf ein Signal von den oberen Schichten zu warten. Als Beispiel wäre der Remote Wake-up laut Standard "OPEN Alliance TC10" relevant. So kann der Sonderzustand beispielsweise auch vorliegen, falls die Ethernet-Kommunikationseinrichtung noch nicht vollständig gestartet bzw. hochgefahren ist. Es sind dann insbesondere noch nicht sämtliche Dienste bzw. Komponenten der

Ethernet-Kommunikationseinrichtung betriebsbereit. Im Startmodus ist es vorteilhaft die Weiterleitung des Nachrichtenpakets an die Medienzugriffssteuerungseinheit zu blockieren, um momentan zur Verfügung stehende Rechenleistung der Ethernet-Kommunikationseinrichtung für den Bootvorgang bzw. den Ladevorgang aufzuwenden. Die Ethernet-Kommunikationseinrichtung kann dadurch schneller gestartet werden und schneller vollständig betriebsbereit sein.

Weiterhin ist es vorzugsweise vorgesehen, dass der Sonderzustand erkannt wird, falls ein Nachrichtenpaketspeicher der Ethernet-Kommunikationseinrichtung voll ist. Der Nachrichtenpaketspeicher kann beispielsweise als zeitlich begrenzter Zwischenspeicher vorliegen, beispielsweise auch als Pufferspeicher in welcher Nachrichtenpakete zwischengespeichert werden, bis sie durch die Ethernet-Kommunikationseinrichtung weiterverarbeitet werden. Falls der Nachrichtenpaketspeicher voll ist, kann es sinnvoll sein, die Weiterleitung von neu eintreffenden Nachrichtenpaketen zur Medienzugriffssteuerungseinheit zu blockieren. Dabei ist es wiederum vorteilhaft, die Nachrichtenpakete bereits an der Schnittstelle zu blockieren, um die Medienzugriffssteuerungseinheit zu entlasten.

Weiterhin ist es vorzugsweise vorgesehen, dass der Sonderzustand erkannt wird, falls die Ethernet-Kommunikationseinrichtung in einem Aktualisierungsmodus ist. Als Beispiel kann der Sonderzustand dadurch erkannt werden, dass die Ethernet Register neu beschrieben oder ausgelesen werden, oder der dafür zuständige Speicherbereich erneuert wird. In dem Aktualisierungsmodus wird beispielsweise eine Firmware der Ethernet-Kommunikationseinrichtung aktualisiert. Während dem Aktualisierungsmodus kann es sein, dass die Ethernet-Kommunikationseinrichtung mit der Aktualisierung beschäftigt ist und das eintreffende Nachrichtenpaket nicht weiter verarbeiten kann oder dadurch die Aktualisierung verzögert wird. Der Aktualisierung kann auch als ein Mitigationsmodus verstanden werden der gestartet wird nachdem ein Problem an der Schnittstelle aufgetreten ist, und demzufolge danach diese Schnittstelle aktualisiert werden muss. Beispielsweise könnten hier auf Medienzugriffssteuerungseinheit die Dienstgüte Parameter geändert werden (Eingangsfilter, VLAN, ...). Vorteilhaft ist es also das Nachrichtenpaket gleich bei der Schnittstelle zu blockieren und nicht noch weiter zu zumindest der Medienzugriffssteuerungseinheit weiter zu leiten, um den Aktualisierungsmodus sicherer und schneller durchführen zu können.

Weiterhin ist es vorzugsweise vorgesehen, dass das Steuersignal durch einen in der Ethernet-Kommunikationseinrichtung integrierten Mikrocontroller erzeugt wird. So kann die Ethernet-Kommunikationseinrichtung selbst das Steuersignal erzeugen. Vorzugsweise kann die Ethernet-Kommunikationseinrichtung auch selbst den Sonderzustand an der Schnittstelle erkennen. Vorteilhaft beim Erzeugen des Steuersignals durch den integrierten Mikrocontroller ist, dass die Ethernet-Kommunikationseinrichtung autark, also unabhängig von anderen Kommunikationseinrichtungen im Ethernet bzw. Bordnetz des Kraftfahrzeugs betrieben werden kann. Zudem kommt es dadurch nur zu geringen Latenzzeiten aufgrund von Übertragungswegen des Steuersignals. Die Blockierung der Weiterleitung des Nachrichtenpakets an der Schnittstelle kann dadurch schneller erfolgen.

Alternativ kann es vorgesehen sein, dass das Steuersignal durch einen zur Ethernet-Kommunikationseinrichtung extern ausgebildeten Mikrocontroller erzeugt wird und das im extern ausgebildeten Mikrocontroller erzeugte Steuersignal zur Ethernet-Kommunikationseinrichtung über eine unblockierte Schnittstelle der Schnittstellen der Ethernet-Kommunikationseinrichtung übertragen wird. Der extern ausgebildete Mikrocontroller kann beispielsweise in einer weiteren Ethernet-Kommunikationseinrichtung des Ethernets vorliegen. Durch den extern ausgebildeten Mikrocontroller wird das Steuersignal außerhalb der Ethernet-Kommunikationseinrichtung erzeugt und über die unblockierte Schnittstelle zur Ethernet-Kommunikationseinrichtung übertragen. Die unblockierte Schnittstelle entspricht eine Schnittstelle welcher anders adressiert sein kann als die Schnittstelle die blockiert ist bzw. angegriffen wird. Die unblockierte Schnittstelle, über welche die Steuersignale übertragen werden, muss also im idealen Fall keine Ethernet-Schnittstelle sein, sondern kann beispielsweise einen I2S, SPI, PCle oder Ähnliches sein - so können Fehler/Angriffe die durch Multicast oder ähnliches geschehen nicht in einem anderen System ohne Gateway übertragen werden. Hier kann auch eine bewusste Entscheidung getroffen werden, die Steuersignale über eine Schnittstelle zu versenden die andersartig ist, also bei der die Nachrichten/Empfängeradressierung anders ist. In einem ersten Schritt erfolgt die Identifikation des Typs der Schnittstelle über den die ungewollte Kommunikation oder der Angriff erfolgt und in einem zweiten Schritt wird einen anderen Typ von Schnittstelle gewählt.

Vorteilhaft ist, dass die Schnittstelle auch von außerhalb der Ethernet-Kommunikationseinrichtung gesteuert werden kann, falls die Ethernet-Kommunikationseinrichtung beispielsweise überlastet ist oder von einem Angriff betroffen ist oder aber teilweise ausgefallen ist. Vorzugsweise weist die Ethernet-Kommunikationseinrichtung also die Schnittstelle auf an welcher das Nachrichtenpaket eintrifft und welche aufgrund des Sonderzustands für eine Weiterleitung des Nachrichtenpakets blockiert wird. Zudem weist die Ethernet-Kommunikationseinrichtung vorzugsweise zumindest die unblockierte Schnittstelle auf, bei welcher zumindest das Steuersignal empfangen wird und auch zum Mikrocontroller oder zu einer Medienzugriffssteuerungseinheit weitergeleitet wird.

Die Erfindung betrifft auch eine Ethernet-Kommunikationseinrichtung für ein Kraftfahrzeug. Die Ethernet-Kommunikationseinrichtung weist eine Medienzugriffssteuerungseinheit und mindestens eine externe physische Schnittstelle auf. Insbesondere ist die Schnittstelle mittels einer Datenleitung mit der Medienzugriffssteuerungseinheit datenübertragend verbunden. Als ein wichtiger Gedanke ist es vorgesehen, dass die Ethernet-Kommunikationseinrichtung dazu eingerichtet ist eine Weiterleitung eines an der Schnittstelle in einem Sonderzustand der Ethernet-Kommunikationseinrichtung eintreffenden Nachrichtenpakets zu einer Medienzugriffssteuerungseinheit der Ethernet-Kommunikationseinrichtung anhand eines Steuersignals zu blockieren. Vorteilhafte Ausführungen des erfindungsgemäßen Verfahrens sind als vorteilhafte Ausführungen der Ethernet-Kommunikationseinrichtung anzusehen. Die gegenständlichen Komponenten der Ethernet-Kommunikationseinrichtung sind jeweils dazu ausgebildet, die jeweiligen Verfahrensschritte durchzuführen. Weitere Merkmale der Erfindung ergeben sich aus den Ansprüchen, den Figuren und der Figurenbeschreibung.

Der Umfang der Erfindung wird somit durch die unabhängigen Ansprüche definiert. Die abhängigen Ansprüche definieren weitere Ausführungsformen.

Ausführungsbeispiele der Erfindung werden nachfolgend anhand schematischer Zeichnungen näher erläutert.

Es zeigen:
- Fig. 1: eine schematische Draufsicht auf ein Kraftfahrzeug mit einem Ausführungsbeispiel einer erfindungsgemäßen Ethernet-Kommunikationseinrichtung;
- Fig. 2: eine schematische Darstellung der Ethernet-Kommunikationseinrichtung mit einer Medienzugriffssteuerungseinheit, einem Mikrocontroller und einer externen physischen Schnittstelle;
- Fig. 3: eine schematische Darstellung eines weiteren Ausführungsbeispiels der Ethernet-Kommunikationseinrichtung mit der Medienzugriffssteuerungseinheit und der Schnittstelle, welche in einem Mikrocontroller der Ethernet-Kommunikationseinrichtung integriert sind;
- Fig. 4: ein Ablaufdiagramm zur Konfiguration der Schnittstelle in einem Sonderzustand;
- Fig. 5: ein weiteres Ablaufdiagramm zum Betrieb der Ethernet-Kommunikationseinrichtung bei erkanntem Sonderzustand; und
- Fig. 6: ein weiteres Ablaufdiagramm zur Entscheidung zwischen Deaktivieren der Schnittstelle und Schleifenschaltung der Schnittstelle bei erkanntem Sonderzustand.

In den Figuren werden gleiche oder funktionsgleiche Elemente mit den gleichen Bezugszeichen versehen.

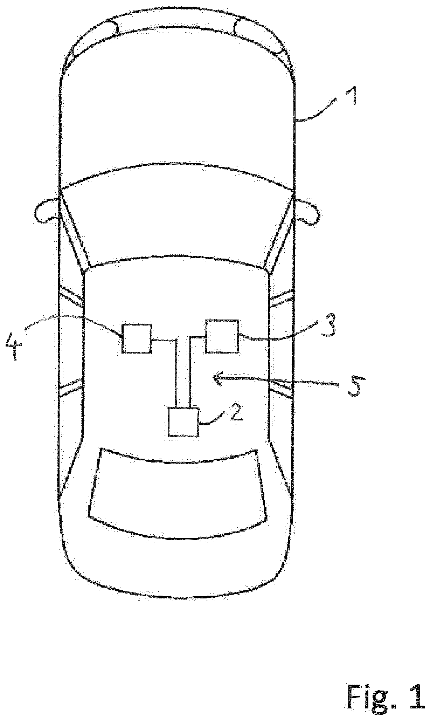

Fig. 1 zeigt ein Kraftfahrzeug 1 mit einer Ethernet-Kommunikationseinrichtung 2. Die Ethernet-Kommunikationseinrichtung 2 ist gemäß dem Ausführungsbeispiel mit einer weiteren Ethernet-Kommunikationseinrichtung 3 und einer Steuereinheit 4 des Kraftfahrzeugs 1 datenübertragend verbunden. Zum Anschluss für die weitere Ethernet-Kommunikationseinrichtung 3 und der Steuereinheit 4 an die Ethernet-Kommunikationseinrichtung 2 weist die Ethernet-Kommunikationseinrichtung 2 mehrere externe physische Schnittstellen auf.

Das Kraftfahrzeug 1 kann beispielsweise als Personenkraftwagen oder Nutzkraftfahrzeug ausgebildet sein.

Die Ethernet-Kommunikationseinrichtung 2 und die weitere Ethernet-Kommunikationseinrichtung 3 sowie die Steuereinheit 4 werden in einem Bordnetz 5 des Kraftfahrzeugs 1 betrieben, welches als Ethernet-Bordnetz ausgebildet ist.

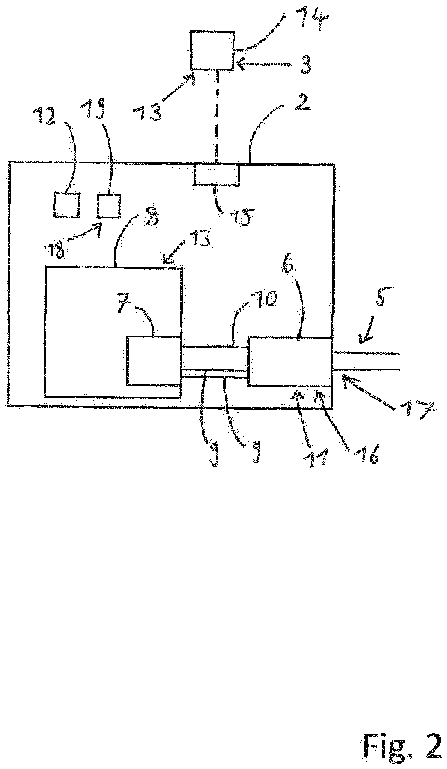

Fig. 2 zeigt die Ethernet-Kommunikationseinrichtung 2. Die Ethernet-Kommunikationseinrichtung 2 weist eine externe physische Schnittstelle 6, eine Medienzugriffssteuerungseinheit 7 und einen Mikrocontroller 8 auf. Die Schnittstelle 6 ist mit der Medienzugriffssteuerungseinheit 7 über eine Datenleitung 9 datenübertragend verbunden. Weiterhin ist die Schnittstelle 6 gemäß dem Ausführungsbeispiel über eine Konfigurationsleitung 10 mit der Medienzugriffssteuerungseinheit 7 datenübertragend verbunden.

Gemäß dem Ausführungsbeispiel ist die Medienzugriffssteuerungseinheit 7 in den Mikrocontroller 8 integriert.

Die Medienzugriffssteuerungseinheit 7 wird auch als MAC (media access controll) bezeichnet. Die Schnittstelle 6 wird auch als PHY bezeichnet. Durch die Schnittstelle 6 wird ein spezieller integrierter Schaltkreis oder eine funktionelle Gruppe eines Schaltkreises bezeichnet, die für die Codierung und Decodierung von Daten zwischen einem rein digitalen System und einem modulierten analogen System zuständig ist. PHY steht dabei für physische Schnittstelle (physical layer). Der Begriff findet sich z. B. auf den Schaltplänen von Ethernet-Karten. Insbesondere ist die Schnittstelle 6 bzw. der PHY quasi die tiefste mögliche Schnittstelle nach dem Kabel des Bordnetzes 5, an welches die Ethernet-Kommunikationseinrichtung 2 angeschlossen ist. Voll integrierte Ethernet-Controller-Bausteine haben einen PHYceiver eingebaut, welcher insbesondere auch einem PHY entspricht. Der PHY ist vorzugsweise als Halbleiter ausgebildet. Er dient dabei dem digitalen Zugriff auf den moduliert betriebenen Kanal. Typischerweise ist er im Umfeld von der unabhängig zu der Schnittstelle ausgebildeten Medienzugriffssteuerungseinheit 7.

An einer der Datenleitung 9 und der Konfigurationsleitung 10 abgewandten Seite der Schnittstelle 6 ist das Bordnetz 5 des Kraftfahrzeugs 1 an die Ethernet-Kommunikationseinrichtung 2 angeschlossen.

Bei einem Ausführungsbeispiel eines Verfahrens wird zuerst ein Sonderzustand 11 an der Schnittstelle 6 erkannt. Der Sonderzustand 11 wird insbesondere dadurch erkannt, dass beispielsweise innerhalb eines vorbestimmten Zeitraums eine Anzahl von empfangener Nachrichtenpaketen größer als ein Nachrichtenpaketgrenzwert ist oder aber, dass sich die Ethernet-Kommunikationseinrichtung 2 noch in einem Startmodus befindet, oder aber, dass ein Nachrichtenpaketspeicher 12 der Ethernet-Kommunikationseinrichtung 2 voll ist und kein weiteres Nachrichtenpaket aufnehmen kann. Der Sonderzustand 11 kann aber auch vorliegen, falls die Ethernet-Kommunikationseinrichtung 2 in einem Aktualisierungsmodus ist und beispielsweise eine Betriebssoftware der Ethernet-Kommunikationseinrichtung 2 aktualisiert oder eingespielt wird.

Der Sonderzustand 11 wird gemäß dem Ausführungsbeispiel durch den Mikrocontroller 8 erkannt. D. h. der Mikrocontroller 8 kann den aktuellen Zustand der Ethernet-Kommunikationseinrichtung 2 mit Referenzzuständen vergleichen und so den Sonderzustand 11 erkennen. So kann der Mikrocontroller 8 beispielsweise die Anzahl der innerhalb des vorbestimmten Zeitraums empfangenen Nachrichtenpakete bestimmen und mit dem Nachrichtenpaketgrenzwert vergleichen. Ist die Anzahl dann größer als der Nachrichtenpaketgrenzwert, so wird der Sonderzustand 11 erkannt. Weiterhin kann der Mikrocontroller 8 beispielsweise auch einen Aktualisierungswert bzw. ein Aktualisierungs-Flag setzen, welches auf den Aktualisierungsmodus hinweist und wodurch wiederum der Sonderzustand 11 erkannt wird. Auch kann der Mikrocontroller 8 beispielsweise erkennen, wenn der Nachrichtenpaketspeicher 12 derart gefüllt ist, dass kein weiteres Nachrichtenpaket aufgenommen werden kann.

Ist der Sonderzustand 11 erkannt, wird ein Steuersignal 13 erzeugt. Gemäß dem Ausführungsbeispiel wird das Steuersignal 13 durch den Mikrocontroller 8 erzeugt. Das Steuersignal 13 kann aber auch durch einen außerhalb der Ethernet-Kommunikationseinrichtung 2 ausgebildeten externen Mikrocontroller 14 erzeugt werden. Der externe Mikrocontroller 14 kann beispielsweise in der weiteren Ethernet-Kommunikationseinrichtung 3 ausgebildet sein.

Wird das Steuersignal 13 im externen Mikrocontroller 14 erzeugt, so wird das Steuersignal 13 gemäß dem Ausführungsbeispiel über eine weitere externe physische Schnittstelle 15 zur Ethernet-Kommunikationseinrichtung 2 übertragen. Durch das Steuersignal 13 kann die Schnittstelle 6 angepasst werden. So kann die Schnittstelle 6 beispielsweise durch das Steuersignal 13 deaktiviert oder aktiviert oder in eine Schleifenschaltung 16 versetzt werden.

Durch das Steuersignal 13 wird dann zumindest eine Weiterleitung eines Nachrichtenpakets 17 zur Medienzugriffssteuerungseinheit 7 blockiert, welches an der Schnittstelle 6, vom Bordnetz 5 kommend, eintrifft. Das Blockieren kann durchgeführt werden, indem die Schnittstelle 6 deaktiviert wird oder aber indem die Schnittstelle 6 die Weiterleitung durch die Schleifenschaltung 16 blockiert. Bei der Schleifenschaltung 16 wird das Nachrichtenpaket 17 wieder ins Bordnetz 5, insbesondere zum Sender des Nachrichtenpakets 17, zurückgesendet.

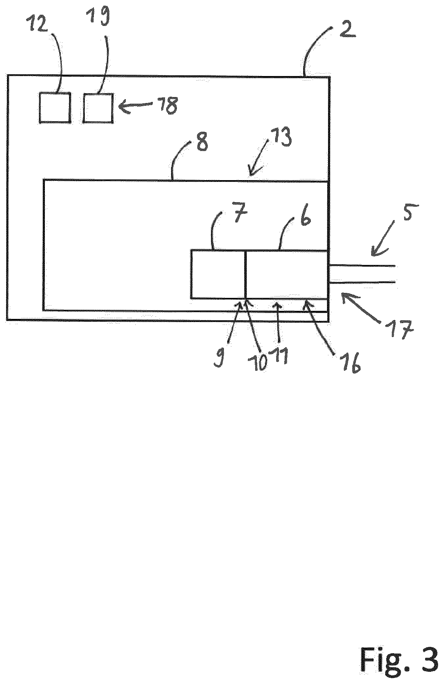

Fig. 3 zeigt die Ethernet-Kommunikationseinrichtung 2 analog zum Ausführungsbeispiel von Fig. 2, jedoch ist die Schnittstelle 6 in den Mikrocontroller 8 integriert. Bei diesem Ausführungsbeispiel ist insbesondere keine separate Stromversorgung für die Schnittstelle 6 vorgesehen, welche einfach getrennt werden könnte. Die Schnittstelle 6 wird vom Mikrocontroller 8 mit Strom versorgt. In diesem Fall wird die Schnittstelle 6 vorzugsweise durch die Schleifenschaltung 16 angepasst, falls der Sonderzustand 11 erkannt wird.

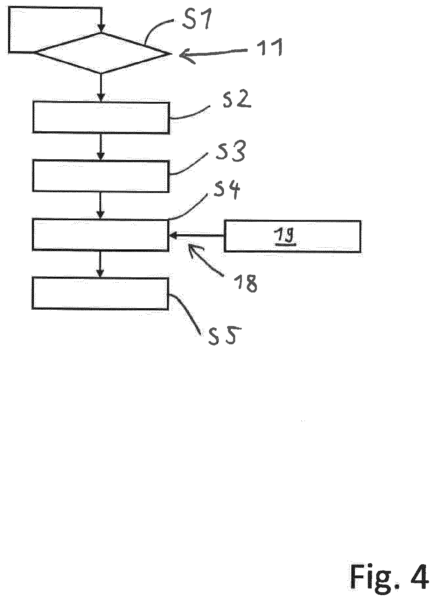

Fig. 4 zeigt ein Ablaufdiagramm zum Anpassen der Schnittstelle 6. In einem Schritt S1 wird der Sonderzustand 11 erkannt. Der Sonderzustand 11 kann beispielsweise ein Angriff, eine Überlast, ein Fehler, eine Anomalie, ein Verlassen der Spezifikation oder ein Pufferüberlauf sein. Wird der Sonderzustand 11 nicht erkannt, wird der Schritt S1 nochmal durchgeführt. Wird der Sonderzustand 11 hingegen erkannt, folgt ein Schritt S2. Im Schritt S2 wird diejenige Schnittstelle 6 der Ethernet-Kommunikationseinrichtung 2 bestimmt, über welche der Angriff gekommen ist bzw. an welcher der Sonderzustand 11 erkannt wird. Die Schnittstelle 6 ist insbesondere als MII (media independent interface) ausgebildet. Die Schnittstelle 6 kann aber auch als SPI (serial peripheral interface), MDIO (management data input/output), RGMII (reduced gigabit media independent interface) oder I2C (inter-integrated circuit) ausgebildet sein. Insbesondere kann die Schnittstelle 6 keine Ethernet-Schnittstelle sein, sondern kann beispielsweise einen I2S, SPI, PCle oder Ähnliches sein die eine andere Protokoll bzw. andere Adressierung verwendet.

Insbesondere gibt es neben der Schnittstelle 6, an welcher der Sonderzustand 11 erkannt wird, auch die weitere Schnittstelle 15, an welcher der Sonderzustand 11 nicht vorliegt. Über die weitere Schnittstelle 15 kann bei Bedarf auch das Steuersignal 13 empfangen werden.

In einem Schritt S3 wird gemäß dem Ausführungsbeispiel eine Verbindung zur Schnittstelle 6 ausgewählt, welche vom Angriff oder vom Sonderzustand 11 nicht betroffen ist. So kann beispielsweise die Konfigurationsleitung 10 oder die Datenleitung 9 ausgewählt werden, um auf die Schnittstelle 6 zuzugreifen.

In einem Schritt S4 wird die Schnittstelle 6 angepasst bzw. rekonfiguriert. Die Schnittstelle 6 wird hierzu mit Anpassungsparametern 18 angepasst. Die Anpassungsparameter 18 werden gemäß dem Ausführungsbeispiel aus einem sicheren Speicher 19 der Ethernet-Kommunikationseinrichtung 2 bereitgestellt. Die Anpassungsparameter 18 können also in dem Schritt S4 aus dem sicheren Speicher 19 ausgelesen werden. Der sichere Speicher 19 ist vorzugsweise separat zum Nachrichtenpaketspeicher 12 ausgebildet.

In einem Schritt S5 wird die Schnittstelle 6 dann konfiguriert bzw. angepasst, so dass die Weiterleitung des Nachrichtenpakets 17 von der Schnittstelle 6 zur Medienzugriffssteuerungseinheit 7 blockiert ist.

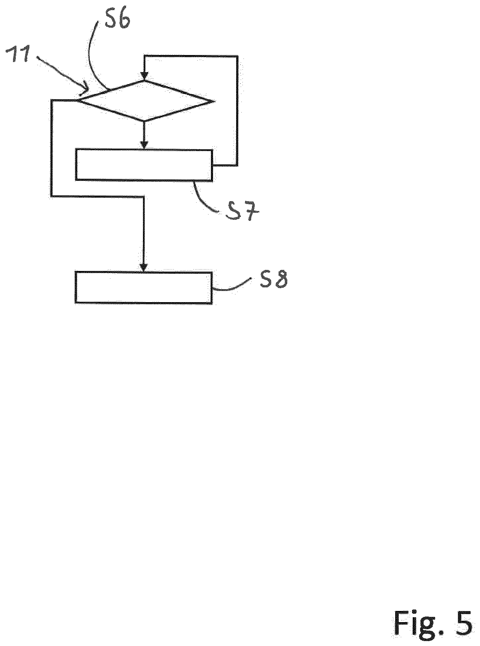

Fig. 5 zeigt ein weiteres Ablaufdiagramm des Verfahrens. In einem Schritt S6 wird bestimmt, ob der Sonderzustand 11 immer noch vorliegt oder schon wieder vergangen ist. Liegt der Sonderzustand 11 immer noch vor, so wird ein Schritt S7 durchgeführt. Im Schritt S7 wird die Deaktivierung der Schnittstelle 6 oder die Schleifenschaltung 16 der Schnittstelle 6 beibehalten und es folgt wieder der Schritt S6.

Wird in Schritt S6 festgestellt, dass der Sonderzustand 11 nicht mehr vorliegt, so folgt ein Schritt S8. Im Schritt S8 wird beispielsweise anhand eines weiteren Steuersignals die Schnittstelle 6 aktiviert oder die Schleifenschaltung 16 aufgehoben.

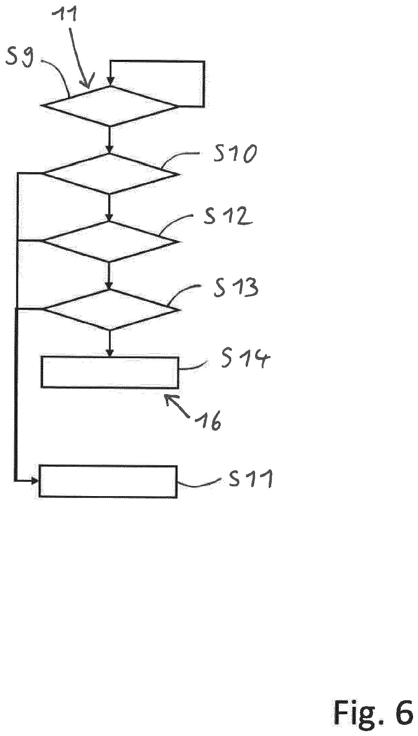

Fig. 6 zeigt ein weiteres Ablaufdiagramm des Verfahrens. Wird der Sonderzustand 11 in einem Schritt S9 nicht erkannt, so folgt der Schritt S9, beispielsweise nach einer Pause, erneut. Wird der Sonderzustand 11 hingegen erkannt, so folgt ein Schritt S10. Im Schritt S10 wird entschieden, ob die Schnittstelle 6 wichtig ist oder unwichtig ist. Es wird insbesondere entschieden, ob die Schnittstelle 6 ein wichtiger Kommunikationslink ist oder nicht. Beispielsweise ist die Schnittstelle 6 wichtig, falls sie ein Backbone-Port in der Mitte des Bordnetzes 5 ist, über den viele verschiedene Datenströme laufen. Ist die Schnittstelle 6 unwichtig, so folgt ein Schritt S11. Ist die Schnittstelle 6 hingegen wichtig, folgt ein Schritt S12.

Im Schritt S12 wird entschieden, ob die Schnittstelle 6 von extern, also beispielsweise durch den externen Mikrocontroller 14, reaktiviert oder gesteuert werden kann. Ist dies der Fall, so folgt der Schritt S11. Ist dies nicht der Fall, so folgt ein Schritt S13. Im Schritt S13 wird eine Anforderung an eine Aufstartzeit bzw. an eine Aufwachzeit der Schnittstelle 6 überprüft. Sind die Anforderungen an die Aufstartzeit der Schnittstelle 6 kleiner als 250 ms, insbesondere kleiner als 100 ms, das bedeutet soll die Schnittstelle 6 innerhalb von weniger als 250 ms, insbesondere weniger als 100 ms, wieder zur Verfügung stehen, so folgt ein Schritt S14. Ist dies nicht der Fall und die Anforderungen an die Aufstartzeit sind weniger streng, da die Aufstartzeit der Schnittstelle 6 mehr als 250 ms, insbesondere 100 ms, betragen kann, so folgt der Schritt S11.

Im Schritt S11 wird die Schnittstelle 6 deaktiviert bzw. abgeschaltet. Insbesondere wird beim Deaktivieren der Schnittstelle 6 die Energiezufuhr der Schnittstelle 6 unterbrochen.

Im Schritt S14 wird die Schnittstelle 6 mit der Schleifenschaltung 16 betrieben. Die Schnittstelle 6 wird also in einen Schleifenmodus bzw. Loopback-Modus versetzt, in welchem das eingehende Nachrichtenpaket 17 an einen Sender des Nachrichtenpakets 17 zurückgesendet wird.

### Bezugszeichenliste

- 1: Kraftfahrzeug
- 2: Ethernet-Kommunikationseinrichtung
- 3: weitere Ethernet-Kommunikationseinrichtung
- 4: Steuereinheit
- 5: Bordnetz
- 6: Schnittstelle
- 7: Medienzugriffssteuerungseinheit
- 8: Mikrocontroller
- 9: Datenleitung
- 10: Konfigurationsleitung
- 11: Sonderzustand
- 12: Nachrichtenpaketspeicher
- 13: Steuersignal
- 14: externer Mikrocontroller
- 15: weitere Schnittstelle
- 16: Schleifenschaltung
- 17: Nachrichtenpaket
- 18: Anpassungsparameter
- 19: sicherer Speicher

## Patentansprüche

1. Verfahren zum Betreiben einer Ethernet-Kommunikationseinrichtung (2) mit mehreren externen physischen Schnittstellen (6, 15) für ein Kraftfahrzeug (1), bei welchem folgende Schritte durchgeführt werden:
- Erkennen eines Sonderzustands (11) an zumindest einer der Schnittstellen (6);
- Erzeugen eines Steuersignals (13) zum Anpassen der Schnittstelle (6) im Sonderzustand (11), falls der Sonderzustand (11) erkannt wird; und
- Blockieren einer Weiterleitung eines an der Schnittstelle (6) im Sonderzustand (11) eintreffenden Nachrichtenpakets (17) zu einer Medienzugriffssteuerungseinheit (7) der Ethernet-Kommunikationseinrichtung (2) anhand des Steuersignals (13),
**dadurch gekennzeichnet, dass**
der Sonderzustand (11) erkannt wird, falls die Ethernet-Kommunikationseinrichtung (2) noch in einem Startmodus, welcher durch einen Ladevorgang der Ethernet-Kommunikationseinrichtung (2) charakterisiert wird, ist, oder dass
der Sonderzustand (11) erkannt wird, falls die Ethernet-Kommunikationseinrichtung (2) in einem Aktualisierungsmodus ist.

2. Verfahren nach Anspruch 1,
**dadurch gekennzeichnet, dass**
die Weiterleitung zur Medienzugriffssteuerungseinheit (7) durch Deaktivieren
der Schnittstelle (6) blockiert wird.

3. Verfahren nach Anspruch 1,
**dadurch gekennzeichnet, dass**
die Weiterleitung zur Medienzugriffssteuerungseinheit (7) durch eine Schleifenschaltung (16) der Schnittstelle (6) blockiert wird.

4. Verfahren nach einem der vorhergehenden Ansprüche,
**dadurch gekennzeichnet, dass**
der Sonderzustand (11) erkannt wird, falls innerhalb eines vorbestimmten Zeitraums eine Anzahl von empfangen Nachrichtenpaketen (17) größer als ein Nachrichtenpaketgrenzwert ist.

5. Verfahren nach einem der vorhergehenden Ansprüche,
**dadurch gekennzeichnet, dass**
der Sonderzustand (11) erkannt wird, falls ein Nachrichtenpaketspeicher (12) der Ethernet-Kommunikationseinrichtung (2) voll ist.

6. Verfahren nach einem der vorhergehenden Ansprüche,
**dadurch gekennzeichnet, dass**
das Steuersignal (13) durch einen in der Ethernet-Kommunikationseinrichtung (2) integrierten Microkontroller (8) erzeugt wird.

7. Verfahren nach einem der Ansprüche 1 bis 5,
**dadurch gekennzeichnet, dass**
das Steuersignal (13) durch einen zur Ethernet-Kommunikationseinrichtung (2) extern ausgebildeten Microkontroller (14) erzeugt wird und das im extern ausgebildeten Microkontroller (14) erzeugte Steuersignal (13) zur Ethernet-Kommunikationseinrichtung (2) über eine unblockierte Schnittstelle (15) der Schnittstellen der Ethernet-Kommunikationseinrichtung (2) übertragen wird.

8. Verfahren nach Anspruch 9, **dadurch gekennzeichnet, dass** die unblockierte Schnittstelle (15) nicht eine Ethernet-Schnittstelle ist.

9. Verfahren nach Anspruch 7, **dadurch gekennzeichnet, dass** die unblockierte Schnittstelle (15) eine weitere externe physische Schnittstelle ist.

10. Ethernet-Kommunikationseinrichtung (2) für ein Kraftfahrzeug (1), mit einer Medienzugriffssteuerungseinheit (7) und mindestens einer externen physischen Schnittstelle (6), wobei
die Ethernet-Kommunikationseinrichtung (2) dazu eingerichtet ist eine Weiterleitung eines an der Schnittstelle (6) in einem Sonderzustand (11) der Ethernet-Kommunikationseinrichtung (2) eintreffenden Nachrichtenpakets (17) zu einer Medienzugriffssteuerungseinheit (7) der Ethernet-Kommunikationseinrichtung (2) anhand eines Steuersignals (13) zu blockieren,
**dadurch gekennzeichnet, dass**
der Sonderzustand (11) erkannt wird, falls die Ethernet-Kommunikationseinrichtung (2) noch in einem Startmodus, welcher durch einen Ladevorgang der Ethernet-Kommunikationseinrichtung (2) charakterisiert wird, ist, oder dass
der Sonderzustand (11) erkannt wird, falls die Ethernet-Kommunikationseinrichtung (2) in einem Aktualisierungsmodus ist.

11. Ethernet-Kommunikationseinrichtung (2) nach Ansprüche 10, **dadurch gekennzeichnet, dass**
die Weiterleitung zur Medienzugriffssteuerungseinheit (7) durch eine Schleifenschaltung (16) der Schnittstelle (6) blockiert wird.

12. Ethernet-Kommunikationseinrichtung (2) nach Anspruch 10 oder 11, **dadurch gekennzeichnet, dass**
die Weiterleitung zur Medienzugriffssteuerungseinheit (7) blockiert wird bis die Konfiguration der Kommunikationseinrichtung (2) abgeschlossen ist.

13. Ethernet-Kommunikationseinrichtung (2) nach Anspruch 10, **dadurch gekennzeichnet, dass**
die Weiterleitung zur Medienzugriffssteuerungseinheit (7) blockiert wird bis der Sonderzustand (11) nicht mehr vorliegt.

## Claims

1. Method for operating an Ethernet communication device (2) having multiple external physical interfaces (6, 15) for a motor vehicle (1), in which the following steps are performed:
- detecting a special state (11) on at least one of the interfaces (6);
- generating a control signal (13) to adapt the interface (6) in the special state (11) if the special state (11) is detected; and
- blocking a forwarding of a message packet (17) arriving on the interface (6) in the special state (11) to a media access control unit (7) of the Ethernet communication device (2) on the basis of the control signal (13),
**characterized in that**
the special state (11) is detected if the Ethernet communication device (2) is still in a starting mode **characterized by** a loading process of the Ethernet communication device (2), or in that
the special state (11) is detected if the Ethernet communication device (2) is in an update mode.

2. Method according to Claim 1,
**characterized in that**
the forwarding to the media access control unit (7) is blocked as a result of deactivation of the interface (6) .

3. Method according to Claim 1,
**characterized in that**
the forwarding to the media access control unit (7) is blocked by a loop circuit (16) of the interface (6).

4. Method according to one of the preceding claims, **characterized in that**
the special state (11) is detected if a number of received message packets (17) within a predetermined period is greater than a message packet limit value.

5. Method according to one of the preceding claims, **characterized in that**
the special state (11) is detected if a message packet memory (12) of the Ethernet communication device (2) is full.

6. Method according to one of the preceding claims, **characterized in that**
the control signal (13) is generated by a microcontroller (8) integrated in the Ethernet communication device (2).

7. Method according to one of Claims 1 to 5,
**characterized in that**
the control signal (13) is generated by a microcontroller (14) in a form external to the Ethernet communication device (2), and the control signal (13) generated in the microcontroller (14) in the external form is transmitted to the Ethernet communication device (2) via an unblocked interface (15) of the interfaces of the Ethernet communication device (2).

8. Method according to Claim 9, **characterized in that** the unblocked interface (15) is not an Ethernet interface.

9. Method according to Claim 7, **characterized in that** the unblocked interface (15) is a further external physical interface.

10. Ethernet communication device (2) for a motor vehicle (1), having a media access control unit (7) and at least one external physical interface (6),
wherein
the Ethernet communication device (2) is configured to block a forwarding of a message packet (17) arriving on the interface (6) in a special state (11) of the Ethernet communication device (2) to a media access control unit (7) of the Ethernet communication device (2) on the basis of a control signal (13), **characterized in that**
the special state (11) is detected if the Ethernet communication device (2) is still in a starting mode **characterized by** a loading process of the Ethernet communication device (2), or in that
the special state (11) is detected if the Ethernet communication device (2) is in an update mode.

11. Ethernet communication device (2) according to Claim 10,
**characterized in that**
the forwarding to the media access control unit (7) is blocked by a loop circuit (16) of the interface (6).

12. Ethernet communication device (2) according to Claim 10 or 11, **characterized in that**
the forwarding to the media access control unit (7) is blocked until the configuration of the communication device (2) is complete.

13. Ethernet communication device (2) according to Claim 10, **characterized in that**
the forwarding to the media access control unit (7) is blocked until the special state (11) no longer exists.

## Revendications

1. Procédé pour faire fonctionner un dispositif de communication Ethernet (2) comprenant plusieurs interfaces (6, 15) physiques externes pour un véhicule automobile (1), avec lequel les étapes suivantes sont exécutées :
- reconnaissance d'un état particulier (11) au niveau d'au moins l'une des interfaces (6) ;
- génération d'un signal de commande (13) afin d'adapter l'interface (6) dans l'état particulier (11) dans le cas où l'état particulier (11) est reconnu ; et
- blocage d'une retransmission d'un paquet de messages (17) entrant au niveau de l'interface (6) dans l'état particulier (11) vers une unité de commande d'accès au support (7) du dispositif de communication Ethernet (2) à l'aide du signal de commande (13),
**caractérisé en ce que**
l'état particulier (11) est reconnu dans le cas où le dispositif de communication Ethernet (2) se trouve encore dans un état de démarrage, lequel est **caractérisé par** une opération de charge du dispositif de communication Ethernet (2), ou en ce que
l'état particulier (11) est reconnu dans le cas où le dispositif de communication Ethernet (2) se trouve dans un mode d'actualisation.

2. Procédé selon la revendication 1, **caractérisé en ce que** la retransmission vers l'unité de commande d'accès au support (7) est bloquée par la désactivation de l'interface (6).

3. Procédé selon la revendication 1, **caractérisé en ce que** la retransmission vers l'unité de commande d'accès au support (7) est bloquée par une commutation en boucle (16) de l'interface (6).

4. Procédé selon l'une des revendications précédentes, **caractérisé en ce que** l'état particulier (11) est reconnu dans le cas où, au sein d'une période prédéterminée, un nombre de paquets de messages (17) reçus est supérieur à une valeur limite de paquets de messages.

5. Procédé selon l'une des revendications précédentes, **caractérisé en ce que** l'état particulier (11) est reconnu dans le cas où une mémoire de paquets de messages (12) du dispositif de communication Ethernet (2) est pleine.

6. Procédé selon l'une des revendications précédentes, **caractérisé en ce que** le signal de commande (13) est généré par un microcontrôleur (8) intégré dans le dispositif de communication Ethernet (2).

7. Procédé selon l'une des revendications 1 à 5, **caractérisé en ce que** le signal de commande (13) est généré par un microcontrôleur (14) configuré extérieurement au dispositif de communication Ethernet (2) et le signal de commande (13) généré dans le microcontrôleur (14) configuré extérieurement est transmis au dispositif de communication Ethernet (2) par le biais d'une interface non bloquée (15) des interfaces du dispositif de communication Ethernet (2).

8. Procédé selon la revendication 9, **caractérisé en ce que** l'interface non bloquée (15) n'est pas une interface Ethernet.

9. Procédé selon la revendication 7, **caractérisé en ce que** l'interface non bloquée (15) est une interface physique supplémentaire.

10. Dispositif de communication Ethernet (2) pour un véhicule automobile (1), comprenant une unité de commande d'accès au support (7) et au moins une interface (6) physique externe,
le dispositif de communication Ethernet (2) étant conçu pour bloquer une retransmission d'un paquet de messages (17) entrant au niveau de l'interface (6) dans l'état particulier (11) du dispositif de communication Ethernet (2) vers une unité de commande d'accès au support (7) du dispositif de communication Ethernet (2) à l'aide d'un signal de commande (13),
**caractérisé en ce que**
l'état particulier (11) est reconnu dans le cas où le dispositif de communication Ethernet (2) se trouve encore dans un état de démarrage, lequel est **caractérisé par** une opération de charge du dispositif de communication Ethernet (2), ou en ce que
l'état particulier (11) est reconnu dans le cas où le dispositif de communication Ethernet (2) se trouve dans un mode d'actualisation.

11. Dispositif de communication Ethernet (2) selon la revendication 10, **caractérisé en ce que** la retransmission vers l'unité de commande d'accès au support (7) est bloquée par une commutation en boucle (16) de l'interface (6) .

12. Dispositif de communication Ethernet (2) selon la revendication 10 ou 11, **caractérisé en ce que** la retransmission vers l'unité de commande d'accès au support (7) est bloquée jusqu'à ce la configuration du dispositif de communication (2) soit terminée.

13. Dispositif de communication Ethernet (2) selon la revendication 10, **caractérisé en ce que** la retransmission vers l'unité de commande d'accès au support (7) est bloquée jusqu'à ce que l'état particulier (11) ne soit plus présent.
